# NEUE EUROPÄISCHE PATENTSCHRIFT

(11) **EP 0 826 096 B2**
(45) Veröffentlichungstag und Bekanntmachung des Hinweises auf die Entscheidung über den Einspruch: **12.03.2003**
(45) Hinweis auf die Patenterteilung: 18.11.1998
(21) Anmeldenummer: 96913449.3
(22) Anmeldetag: 02.05.1996
(51) Int. Cl.: F01K 23/10

(54) **VERFAHREN UND ANORDNUNG ZUM ENTGASEN EINES KONDENSATS**
PROCESS AND DEVICE FOR DEGASSING A CONDENSATE
PROCEDE ET DISPOSITIF PERMETTANT DE DEGAZER UN CONDENSAT

(30) Priorität: 15.05.1995 DE 19517792
(43) Veröffentlichungstag der Anmeldung: 04.03.1998
(73) Patentinhaber: SIEMENS AKTIENGESELLSCHAFT, 80333 München (DE)
(72) Erfinder: BRÜCKNER, Hermann, D-91080 Uttenreuth (DE); SCHMID, Erich, D-91080 Rathsberg (DE)
(86) Internationale Anmeldenummer: DE9600756
(87) Internationale Veröffentlichungsnummer: WO96036792

(56) Entgegenhaltungen:
- EP-A- 0 037 845
- WO-A-83/01812
- DE-A- 4 022 544
- NL-A- 8 203 813
- PATENT ABSTRACTS OF JAPAN vol. 4, no. 158 (M-039), 5.November 1980 & JP,A,55 109708 (HITACHI), 23.August 1980,

## Beschreibung

Die Erfindung bezieht sich auf ein Verfahren zum Entgasen eines Kondensats in einem Wasser-Dampf-Kreislauf einer Gas- und Dampfturbinenanlage. Sie bezieht sich weiter auf eine Vorrichtung zur Durchführung des Verfahrens.

Bei einer Gas- und Dampfturbinenanlage wird die in dem Abgas aus der Gasturbine enthaltene Wärme zur Erzeugung von Dampf für die Dampfturbine benutzt. Dabei wird in einem Wasser-Dampf-Kreislauf der in der Dampfturbine entspannte Dampf kondensiert, und das dabei anfallende Speisewasser wird in einem vom heißen Abgas aus der Gasturbine durchströmten Abhitzekessel verdampft. Um Korrosionen im Wasser-Dampf-Kreislauf zu vermeiden, wird üblicherweise das im Kondensat gelöste Gas, insbesondere Sauerstoff, durch thermische Entgasung entfernt. Dazu ist üblicherweise eine Entgasungsmöglichkeit in einem dem Kondensator der Dampfturbine nachgeschalteten Speisewasserbehälter vorgesehen, wobei das dem Speisewasser zuströmende, bei einer Temperatur von 8 bis 15 °C leicht unterkühlte Kondensat im Speisewasserbehälter mit einem Heizmedium bis zur Siedetemperatur aufgewärmt wird.

Bei einem aus der Druckschrift "Handbuch der Energie", Bd. 7, 1984, Seiten 100 bis 107, bekannten Verfahren zur Aufwärmung und Entgasung des im Speisewasserbehälter gesammelten Kondensats wird als Heizmedium Dampf verwendet, der zu diesem Zweck zusätzlich in einem Niederdruckverdampfer im Abhitzekessel erzeugt wird. Wie in der Europäischen Patentanmeldung 0 515 911 gezeigt, kann alternativ auch Dampf in Form einer Anzapfung eines Niederdruckteils der Dampfturbine als Heizmedium verwendet werden. In beiden Fällen geht dieser Heizdampf jedoch zum Antrieb der Dampfturbine verloren, so daß der Wirkungsgrad der Anlage begrenzt ist.

Aus der Europäischen Patentanmeldung EP 0 037 845 ist weiterhin eine kombinierte Gas- und Dampfturbinenanlage bekannt, bei der zur Speisewasservorwärmung eine separate, über den Abhitzekessel geführte Vorwärmschleife vorgesehen ist. Aus der JP-A-55/109708 ist eine Gas- und Dampfturbinenanlage bekannt, bei der zur Beheizung des Speisewasserbehälters die Einleitung vorgewärmten Speisewassers vorgesehen ist. In diesen Fällen ist jedoch ein erheblicher technischer Aufwand zur Bereitstellung der für die Kondensatentgasung erforderlichen Systeme gegeben.

Der Erfindung liegt daher die Aufgabe zugrunde, ein Verfahren zum Entgasen eines Kondensats in einem Wasser-Dampf-Kreislauf einer Gas- und Dampfturbinenanlage anzugeben, bei dem bei gleichzeitig hohem Wirkungsgrad der Anlage durch besonders hohe Energieausnutzung der Abwärme aus der Gasturbine mit besonders einfachen Mitteln eine ausreichende Entgasung des Kondensats gewährleistet ist. Dies soll bei einer zur Durchführung des Verfahrens geeigneten Anordnung mit einfachen Mitteln erreicht werden.

Bezüglich des Verfahrens wird diese Aufgabe erfindungsgemäß dadurch gelöst, daß dem vorgewärmten Kondensat kaltes Kondensat zugemischt wird, wobei als Heizmedium ein Teilstrom des vorgewärmten unvermischten Kondensats verwendet wird.

Die Erfindung geht dabei von der Überlegung aus, unter Vermeidung der Entnahme von Dampf aus dem Wasser-Dampf-Kreislauf das Heizmedium zur Entgasung im Speisewasserbehälter möglichst aus dem Niederdruck-Temperaturbereich der Gasturbinen-Abgase zu gewinnen, um dadurch eine besonders hohe Abgaswärmenutzung und damit einen hohen Wirkungsgrad des Abhitzekessels zu erreichen. Zum Einstellen der Speisewassertemperatur im Speisewasserbehälter wird dabei lediglich eine Teilmenge des Kondensats vorgewärmt, der anschließend kaltes Kondensat zugemischt wird.

Der Teilstrom kann dabei direkt in den Speisewasserbehälter eingeleitet werden. Vorzugsweise wird jedoch der Teilstrom vor dessen Einleiten in den Speisewasserbehälter entspannt. Dabei wird zweckmäßigerweise sowohl bei der Entspannung des Teilstroms entstehender Dampf als auch dabei entstehendes Wasser dem Speisewasserbehälter zugeführt.

Die Einstellung der Vorwärmtemperatur des Kondensats vor dessen Eintritt in den Speisewasserbehälter erfolgt vorzugsweise dadurch, daß mindestens ein Teil des vorgewärmten Kondensats im Kreis geführt wird, wobei dem kalten Kondensat vorgewärmtes Kondensat zugemischt wird.

Der Speisewasserbehälter übernimmt zusätzlich zur Entgasungsfunktion auch die Funktion eines Zwischenspeichers, wobei dessen Füllstand zur Einstellung des dem Wasser-Dampf-Kreislauf zugeführten Speisewasserstroms anhand des sich im Speisewaserbehälter einstellenden Kondensatspiegels überwacht wird. Um eine besonders effektive Entgasung des Kondensats zu erreichen, wird vorzugsweise das Heizmedium in den Speisewasserbehälter unterhalb des Kondensatspiegels geführt. Die durch die Aufheizung des Kondensats freigesetzten Gase treten dann an der Oberfläche des Kondensatspiegels aus, so daß die Abschwadung der freigesetzten Gase im Speisewasserbehälter stattfindet.

Bezüglich einer Vorrichtung zur Durchführung des Verfahrens mit einem Abhitzedampferzeuger mit in einen Wasser-Dampf-Kreislauf geschaltetem Kondensatvorwärmer wird die genannte Aufgabe dadurch gelöst, daß dem Kondensatvorwärmer über den Speisewasserbehälter ein Niederdruck-Economizer nachgeschaltet ist, wobei der Kondensatvorwärmer ausgangsseitig eine in den Speisewasserbehälter mündende Abströmleitung aufweist, und wobei dem Kondensatvorwärmer eine zwischen einen Kondensator und den Speisewasserbehälter geschaltete Bypassleitung parallelgeschaltet ist.

Die Einbringung des Heizmediums, d.h. des vorgewärmten Kondensats in den Speisewasserbehälter kann auf unterschiedliche Art und Weise erfolgen. Eine Möglichkeit besteht darin, das aus dem Kondensatvorwämer austretende heiße und unter Druck stehende Kondensat über ein geeignetes Rohrsystem mit einem Düsenrohr direkt in den Speisewasserbehälter einzuleiten, so daß sich dort im Düsenrohr das Wasser/Dampf-Gemisch entspannt.

In bevorzugter Ausgestaltung erfolgt die Entspannung in einem Entspannungsbehälter, der in die Abströmleitung geschaltet ist. Dabei ist der Entspannungsbehälter zweckmäßigerweise sowohl dampfseitig als auch wasserseitig mit dem Speisewasserbehälter verbunden.

Zur Einstellung der Kondensattemperatur ist dem Kondensatvorwärmer eine Rückführleitung parallelgeschaltet.

Ausführungsbeispiele der Erfindung werden anhand einer Zeichnung näher erläutert. Darin zeigen:
- Figur 1: im Ausschnitt einen Abhitzedampferzeuger einer Gas- und Dampfturbinenanlage mit einer Schaltung zur Entgasung im Speisewasserbehälter,
- Figur 2: eine gegenüber dem Ausführungsbeispiel nach Figur 1 abweichende Ausführungsform mit einem Entspannungsbehälter im Kondensatstrang, und

Einander entsprechende Teile sind in allen Figuren mit denselben Bezugszeichen versehen.

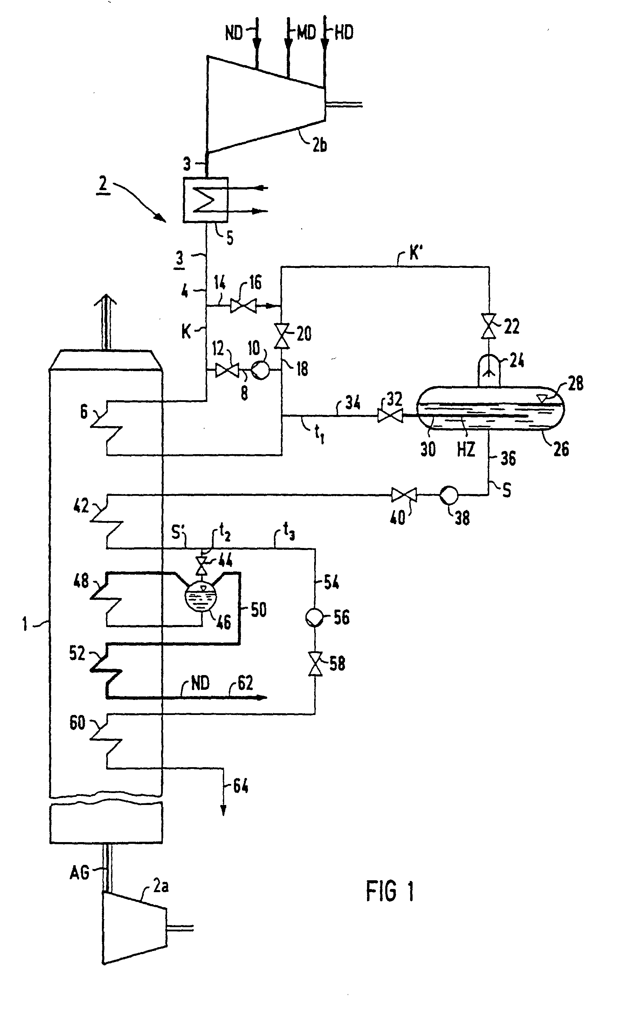

Der in Figur 1 im Ausschnitt dargestellte Abhitzedampferzeuger 1 ist Teil einer Gas- und Dampfturbinenanlage 2 zur Erzeugung elektrischer Energie. Er wird vom heißen Abgas AG aus der Gasturbine 2a durchströmt und dient zur Dampferzeugung, wobei dessen Heizflächen in einen Wasser-Dampf-Kreislauf 3 einer Dampfturbine 2b geschaltet sind.

Dazu weist der Abhitzedampferzeuger 1 einen über eine Kondensatleitung 4 an einen Kondensator 5 angeschlossenen Kondensatvorwärmer 6 auf, der ausgangsseitig über eine Rückführleitung 8 mit einer Umwälzpumpe 10 und einem Ventil 12 mit seinem Eingang verbunden ist. Zur bedarfsweisen Umführung des Kondensatvorwärmers 6 ist diesem eine Bypassleitung 14 mit einem Ventil 16 parallelgeschaltet. Der Kondensatvorwärmer 6 ist außerdem ausgangsseitig über eine Leitung 18, in die Ventile 20 und 22 geschaltet sind, an einen Entgaser 24 angeschlossen, der Teil eines Speisewasserbehälters 26 ist. In den Speisewasserbehälter 26 mündet unterhalb eines Kondensatspiegels 28 ein Düsenrohr 30 ein, das über ein Ventil 32 in einer Rohrleitung 34 mit der Leitung 18 und somit mit dem Ausgang des Kondensatvorwärmers 6 verbunden ist.

Der Speisewasserbehälter 26 ist ausgangsseitig über eine Speisewasserleitung 36 mit einer Speisewasserpumpe 38 und einem Ventil 40 mit einem Niederdruck-Vorwärmer oder Niederdruck-Economizer 42 verbunden, der als Heizfläche im Abhitzedampferzeuger 1 angeordnet ist. Der Niederdruck-Economizer 42 ist über ein Ventil 44 mit einer Niederdruck-Trommel 46 verbunden, an die ein ebenfalls im Abhitzedampferzeuger 1 als Heizfläche angeordneter Niederdruck-Verdampfer 48 angeschlossen ist. Die Niederdruck-Trommel 46 ist dampfseitig über eine Leitung 50 mit einem Niederdruck-Überhitzer 52 verbunden, dessen Heizfläche ebenfalls im Abhitzedampferzeuger 1 angeordnet ist.

Der Niederdruck-Economizer 42 ist ausgangsseitig außerdem über eine Leitung 54 mit einer Pumpe 56 und einem Ventil 58 mit einer weiteren im Abhitzedampferzeuger 1 angeordneten Economizer-Heizfläche 60 verbunden. Die Economizer-Heizfläche 60 ist ausgangsseitig in nicht näher dargestellter Art und Weise mit weiteren im Abhitzedampferzeuger 1 angeordneten Verdampfer- und Überhitzerheizflächen verbunden, die ebenso wie der Niederdruck-Überhitzer 52 in die Dampfturbine 2b münden. Diese ist durch die Pfeile 62 und 64 angedeutet. Dabei wird der Dampfturbine 2b Dampf unterschiedlicher Druckstufen, d.h. Niederdruck-Dampf ND, Mitteldruck-Dampf MD und Hochdruck-Dampf HD zugeführt.

Beim Betrieb des Abhitzedampferzeugers 1 wird dem Kondensatvorwärmer 6 über die Kondensatleitung 4 Kondensat K aus einem der Dampfturbine nachgeschalteten Kondensator 5 zugeführt. Dabei kann der Kondensatvorwärmer 6 über die Bypassleitung 14 ganz oder teilweise umführt werden. Das Kondensat K wird in dem Kondensatvorwärmer 6 durch Wärmetausch mit dem aus der Gasturbine 2a abströmenden heißen Abgas AG aufgewärmt und dazu mindestens teilweise über die Umwälzpumpe 10 in der Rückführleitung 8 umgewälzt. Das aufgewärmte Kondensat K' wird über die Leitung 18 in den Speisewasserbehälter 26 geführt. Dabei erfolgt dort eine Aufheizung des vorgewärmten Kondensats K' mittels eines über die Leitung 34 geführten Teilstroms t₁ des vorgewärmten Kondensats K'. Dazu wird der Teilstrom t₁ über das Ventil 32 als Heizmedium HZ direkt in den Speisewasserbehälter 26 eingeleitet, wobei es im Düsenrohr 30 entspannt. Die Abschwadung der freigesetzten Gase findet somit lediglich im Speisewasserbehälter 26 statt.

Das vorgewärmte Kondensat K' wird über die Speisewasserpumpe 38 als Speisewasser S dem Niederdruck-Economizer 42 zugeführt, wobei dort das Speisewasser S weiter aufgewärmt wird. Ein Teilstrom t₂ des vorgewärmten Speisewassers S wird in die Niederdruck-Trommel 46 geführt. Dieser wird im Niederdruck-Verdampfer 48 verdampft, wobei in der Niederdruck-Trommel 46 abgetrennter Dampf im Niederdruck-Überhitzer 52 überhitzt wird und der überhitzte Niederdruck-Dampf ND dem Niederdruckteil der Dampfturbine 2b zugeführt wird.

Ein Teilstrom t₃ des vorgewärmten Speisewassers S' wird mittels der Pumpe 56 auf ein hohes Druckniveau gebracht und anschließend im Economizer 60 weiter aufgewärmt. Dieser Teilstrom t₃ wird in nicht näher dargestellter Art und Weise ebenfalls verdampft und der überhitzte Hochdruck-Dampf HD wird dem Hochdruckteil der Dampfturbine 2b zugeführt.

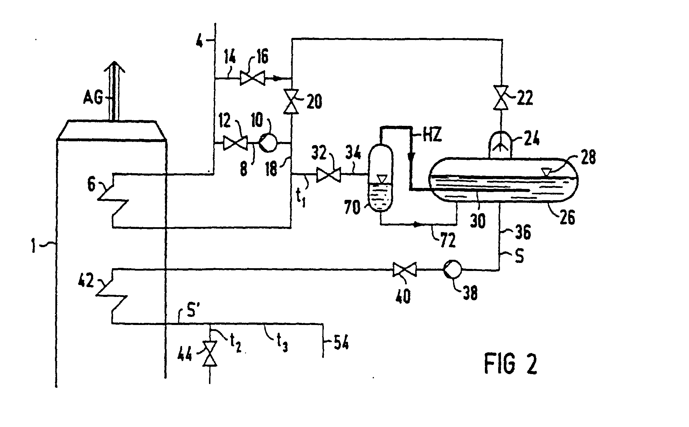

Beim Ausführungsbeispiel gemäß Figur 2 ist in die Abströmleitung 34 ein Entspannungsbehälter 70 geschaltet. Als Heizmedium HZ wird hier der bei der Entspannung des Teilstroms t₁ des vorgewärmten Kondensats K' im Entspannungsbehälter 70 abgetrennte Dampf verwendet. Das bei der Entspannung des Teilstroms t₁ im Entspannungsbehälter 70 abgetrennte Wasser wird über eine Leitung 72 dem Speisewasserbehälter 26 zugeführt.

Durch Verwendung des Teilstroms t₁ des vorgewärmten Kondensats K' als Heizmedium HZ zum Aufheizen des Kondensats K' im Speisewasserbehälter 26 wird in besonders effektiver Weise Wärme für das Heizmedium HZ aus dem Niedertemperaturbereich des Abhitzedampferzeugers 1 entnommen, ohne daß zusätzliche Vorwärm- oder Verdampferheizflächen und/oder zusätzliche Hilfsaggregate, wie z.B. Pumpen, benötigt werden.

## Patentansprüche

1. Verfahren zum Entgasen eines Kondensats (K) einer Gas- und Dampfturbinenanlage (2) durch Aufheizen des Kondensats in einem Speisewasserbehälter (26), dem vorgewärmtes Kondensat (K') zugeführt und Speisewasser (S) für in den Wasser-Dampf-Kreislauf (3) der Dampfturbine (2b) geschaltete und vom Abgas (AG) aus der Gasturbine (2a) beheizte Heizflächen (6, 42, 48, 52, 60) entnommen wird, **dadurch gekennzeichnet, daß** dem vorgewärmten Kondensat (K') kaltes Kondensat (K) zugemischt wird, und daß als Heizmedium (HZ) zum Aufheizen des Kondensats ein Teilstrom (t₁) des vorgewärmten unvermischten Kondensats (K') verwendet wird.

2. Verfahren nach Anspruch 1,
**dadurch gekennzeichnet, daß** der Teilstrom (t₁) vor dessen Einleiten in den Speisewasserbehälter (26) entspannt wird.

3. Verfahren nach Anspruch 2,
**dadurch gekennzeichnet, daß** sowohl bei der Entspannung des Teilstroms (t₁) entstehender Dampf als auch dabei entstehendes Wasser dem Speisewasserbehälter (26) zugeführt wird.

4. Verfahren nach einem der Ansprüche 1 bis 3,
**dadurch gekennzeichnet, daß** das Heizmedium (HZ) in den Speisewasserbehälter (26) unterhalb des Kondensatspiegels (28) geführt wird.

## Claims

1. Method of deaerating a condensate (K) of a gas- and steam-turbine plant (2) by heating the condensate in a feedwater tank (26) to which preheated condensate (K') is fed and from which feedwater (S) is extracted for heating surfaces (6, 42, 48, 52, 60) connected in the water/steam cycle (3) of the steam turbine (2b) and heated by the exhaust gas (AG) from the gas turbine (2a), **characterized in that** cold condensate (K) is admixed to the preheated condensate (K'), and **in that** a partial flow (t₁) of the preheated unmixed condensate (K') is used as heating medium (HZ) for heating the condensate.

2. Method according to Claim 1, **characterized in that** the partial flow (t₁) is expanded before it is passed into the feedwater tank (26).

3. Method according to Claim 2, **characterized in that** both steam arising during the expansion of the partial flow (t₁) and water arising in the process are fed to the feedwater tank (26).

4. Method according to one of Claims 1 to 3, **characterized in that** the heating medium (HZ) is passed into the feedwater tank (26) below the condensate level (28) .

## Revendications

1. Procédé pour dégazer un condensat (K) d'une installation (2) de turbines à gaz et à vapeur, par chauffage du condensat dans une bâche d'eau d'alimentation (26), à laquelle est envoyé un condensat préchauffé (K'), de l'eau d'alimentation (S) étant prélevée pour les surfaces de chauffe (6, 42, 48, 52, 60), montées dans le circuit eau-vapeur (3) de la turbine à vapeur (2b) et chauffées par les gaz (AG) sortant de la turbine à gaz (2a), **caractérisé en ce qu'**on mélange du condensat froid (K) au condensat préchauffé (K'), et que l'on utilise en tant que fluide de chauffe (HZ) pour chauffer le condensat un courant partiel (t₁) du condensat (K') préchauffé et non-mélangé.

2. Procédé selon la revendication 1, **caractérisé en ce que** le courant partiel (t₁, t₄) est détendu avant d'être introduit dans la bâche d'eau d'alimentation (26).

3. Procédé selon la revendication 2, **caractérisé en ce que** l'on amène à la bâche d'eau d'alimentation (26) tant la vapeur qui s'est formée lors de la détente du courant partiel (t₁, t₄) que l'eau qui se forme à cette occasion.

4. Procédé selon l'une des revendications 1 à 3, **caractérisé en ce que** le fluide de chauffe (HZ) est introduit dans la bâche d'eau d'alimentation (26) en-dessous du niveau de condensat (28).
